# EUROPEAN PATENT SPECIFICATION

(11) **EP 4 029 010 B1**
(45) Date of publication and mention of the grant of the patent: **13.09.2023**
(21) Application number: 20736844.0
(22) Date of filing: 17.06.2020
(51) Int. Cl.: G10L 13/08, G10L 13/047, G06N 3/044, G06N 3/045, G06N 3/08

(54) **NEURAL TEXT-TO-SPEECH SYNTHESIS WITH MULTI-LEVEL CONTEXT FEATURES**
NEURONALE SPRACHSYNTHESE MIT MULTILEVEL KONTEXTMERKMALEN
SYNTHÈSE DE LA PAROLE NEURALE AVEC DES CARACTÉRISTIQUES DE CONTEXTE MULTI-NIVEAUX

(30) Priority: 12.09.2019 CN 201910864208
(43) Date of publication of application: 20.07.2022
(73) Proprietor: Microsoft Technology Licensing, LLC, Redmond, WA 98052-6399 (US)
(72) Inventor: ZHANG, Shaofei, Redmond, Washington 98052-6399 (US); HE, Lei, Redmond, Washington 98052-6399 (US)
(74) Representative: CMS Cameron McKenna Nabarro Olswang LLP
(86) International application number: PCT/US2020/038019
(87) International publication number: WO 2021/050134

(56) References cited:
- WO-A1-2020/118643
- US-A1- 2018 114 522
- YIBIN ZHENG ET AL: "BLSTM-CRF Based End-to-End Prosodic Boundary Prediction with Context Sensitive Embeddings in a Text-to-Speech Front-End", INTERSPEECH 2018, 1 January 2018 (2018-01-01), pages 47-51, XP055697974, ISCA DOI: 10.21437/Interspeech.2018-1472
- WEN ZHENGQI ET AL: "Improving Deep Neural Network Based Speech Synthesis through Contextual Feature Parametrization and Multi-Task Learning", JOURNAL OF SIGNAL PROCESSING SYSTEMS, SPRINGER, US, vol. 90, no. 7, 2 October 2017 (2017-10-02), pages 1025-1037, XP036515690, ISSN: 1939-8018, DOI: 10.1007/S11265-017-1293-Z [retrieved on 2017-10-02]

## Description

### BACKGROUND

Text-to-speech (TTS) synthesis aims at generating a corresponding speech waveform based on a text input. The TTS synthesis is widely applied for speech-to-speech translation, speech customization for certain users, role playing in a fairy tale, etc. A neural TTS system is being more and more adopted for implementing TTS synthesis, and is tending to be one of the most popular directions in Artificial Intelligence (AI) field in recent years. The neural TTS system may predict acoustic features based on a text input, and further generate a speech waveform based on the predicted acoustic features. Different from traditional TTS techniques which require well-designed frontend linguistic features, the neural TTS system is modeled in an end-to-end structure and may be trained directly based on, for example, text-speech data pairs. The neural TTS system may jointly optimize pronunciation, prosody, etc. of speech, which results in more natural synthesized speech than the traditional TTS techniques.

YIBIN ZHENG ET AL: "BLSTM-CRF Based End-to-End Prosodic Boundary Prediction with Context Sensitive Embeddings in a Text-to-Speech Front-End", INTERSPEECH 2018, 1 January 2018, describes a language-independent end-to-end architecture for prosodic boundary prediction based on BLSTMCRF. The proposed architecture has three components, word embedding layer, BLSTM layer and CRF layer. The word embedding layer is employed to learn the task-specific embeddings for prosodic boundary prediction. The BLSTM layer can efficiently use both past and future input features, while the CRF layer can efficiently use sentence level information. These three components are integrated and the whole process is learned end-to-end. This paper investigates both character-level embeddings and context sensitive embeddings to this model, and employs an attention mechanism for combining alternative word-level embeddings. By using an attention mechanism, the model is able to decide how much information to use from each level of embeddings. Objective evaluation results show the proposed BLSTM-CRF architecture achieves the best results on both Mandarin and English datasets, with an absolute improvement of 3.21% and 3.74% in F1 score, respectively, for intonational phrase prediction, compared to previous state-of-the-art method (BLSTM). The subjective evaluation results further indicate the effectiveness of the proposed methods.

### SUMMARY

The invention is set out in the appended set of claims.

This Summary is provided to introduce a selection of concepts that are further described below in the Detailed Description. It is not intended to identify key features or essential features of the claimed subject matter, nor is it intended to be used to limit the scope of the claimed subject matter.

Embodiments of the present disclosure provide a method and apparatus for generating speech through neural TTS synthesis. A text input is obtained. A phone feature of the text input is generated. Context features of the text input are generated based on a set of sentences associated with the text input. A speech waveform corresponding to the text input is generated based on the phone feature and the context features.

It should be noted that the above one or more aspects comprise the features hereinafter fully described and particularly pointed out in the claims. The following description and the drawings set forth in detail certain illustrative features of the one or more aspects.

### BRIEF DESCRIPTION OF THE DRAWINGS

The disclosed aspects will hereinafter be described in connection with the appended drawings that are provided to illustrate and not to limit the disclosed aspects.
FIG. 1 illustrates an exemplary traditional neural TTS system.
FIG. 2 illustrates an exemplary neural TTS system according to an embodiment of the present disclosure.
FIG. 3 is a schematic diagram illustrating context features according to an embodiment of the present disclosure.
FIG. 4 illustrates an exemplary process for generating a current semantic feature according to an embodiment of the present disclosure.
FIG. 5 illustrates an exemplary process for generating a historical acoustic feature according to an embodiment of the present disclosure.
FIG. 6 illustrates an exemplary implementation of an acoustic encoder according to an embodiment of the present disclosure.
FIG. 7 illustrates an exemplary process for generating a historical semantic feature according to an embodiment of the present disclosure.
FIG. 8 illustrates an exemplary process for generating a future semantic feature according to an embodiment of the present disclosure.
FIG. 9 illustrates an exemplary process for generating a paragraph semantic feature according to an embodiment of the present disclosure.
FIG. 10 illustrates an exemplary process for generating a position feature according to an embodiment of the present disclosure.
FIG. 11 illustrates another exemplary neural TTS system according to an embodiment of the present disclosure.
FIG. 12 illustrates yet another exemplary neural TTS system according to an embodiment of the present disclosure.
FIG. 13 is a flowchart of an exemplary method for generating speech through neural TTS synthesis according to an embodiment of the present disclosure.
FIG. 14 illustrates an exemplary process for generating training data of a neural TTS system according to an embodiment of the present disclosure.
FIG. 15 illustrates an exemplary process for training a neural TTS system according to an embodiment of the present disclosure.
FIG. 16 is a flowchart of an exemplary method for generating speech through neural TTS synthesis according to an embodiment of the present disclosure.
FIG. 17 illustrates an exemplary apparatus for generating speech through neural TTS synthesis according to an embodiment of the present disclosure.
FIG. 18 illustrates an exemplary apparatus for generating speech through neural TTS synthesis according to an embodiment of the present disclosure.

### DETAILED DESCRIPTION

The present disclosure will now be discussed with reference to several example implementations. It is to be understood that these implementations are discussed only for enabling those skilled in the art to better understand and thus implement the embodiments of the present disclosure, rather than suggesting any limitations on the scope of the present disclosure.

A neural TTS system may be used to generate speech corresponding to a text input. A traditional neural TTS system uses only a phone feature or a character feature of a current text input, such as a current sentence, to generate speech. Herein, the phone feature refers to information representations of phones pronouncing the text input, which is generated based on a phone sequence identified from the text input, wherein the phone sequence is a list of sequential phones that form pronunciation of the text input. The character feature refers to information representations of characters constituting the text input, which is generated based on a character sequence identified from the text input, wherein the character sequence is a list of sequential characters contained in the text input.

Generally, the same text may correspond to different pronunciations, such as pronunciations having different speech rates, tones, prosodies, emotions, or pleasantness. From a mathematical point of view, conversion from text to speech can be viewed as a large-scale inverse problem, which decompresses a highly compressed source, e.g., text, into a very complex target, e.g., audio signals. The neural TTS system tries to solve this problem with machine learning techniques, which can be viewed as a one-to-many mapping problem from a machine learning point of view. Since the traditional neural TTS system uses only the phone feature or character feature of the current text input to generate speech, lacking information related to context contained in the text input or text adjacent to the text input, the traditional neural TTS system cannot effectively solve the one-to-many mapping problem. Therefore, the traditional neural TTS systems typically generate less expressive speech with a fixed pattern, such as reading-style speech with a plain prosody and emotion.

In addition, when generating speech for a set of sentences, such as a paragraph, the traditional neural TTS system usually generates a corresponding speech waveform for each sentence in the set of sentences respectively, and then combines all generated speech waveforms, thereby obtaining a speech waveform corresponding to the set of sentences. Further, at the time of combination, pause durations between respective speech waveforms corresponding to respective sentences are usually set to be the same or fixed. This will also result in similar rhythms between the sentences, making the generated speech quite boring.

Embodiments of the present disclosure propose to improve speech generating ability of a neural TTS system by further using multi-level context features. The context features may be generated based on a plurality of levels of context information, the context information including, for example, a word sequence of a text input, a word sequence and acoustic features of adj acent text of the text input, position information of the text input, etc. The acoustic features may include various traditional TTS acoustic features, such as mel-spectrum, linear spectrum pairs (LSP), etc. The position information may refer to information representations of a position of the text input in the adjacent text.

The embodiments of the present disclosure propose to use both a phone feature and multi-level context features of the text input to generate speech corresponding to the text input. The context features generated based on context information may contain priori knowledge about semantics and acoustics. The neural TTS system may learn general patterns of speech rates, tones, prosodies, emotions or pleasantness from such prior knowledge. Therefore, when generating speech, considering more features such as the above-mentioned context features may help alleviate the one-to-many mapping problem and enhance the speech generating ability of the neural TTS system, thereby generating more natural and more expressive speech.

In another aspect, the embodiments of the present disclosure propose that when generating a speech waveform for a set of sentences, such as a paragraph, pauses between the sentences may be modeled, and pause durations may be determined based on the context features. Since the pause durations between the sentences are related to the context features, it may vary with the context features, so a rhythm of the generated speech will be more abundant and natural.

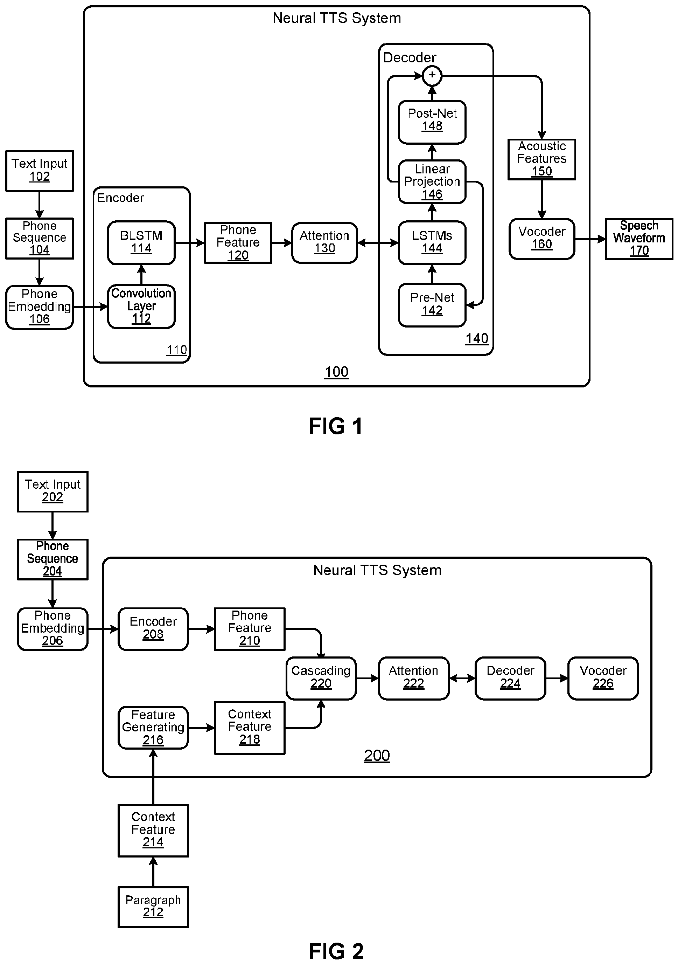

FIG. 1 illustrates an exemplary traditional neural TTS system 100. The neural TTS system 100 is configured to generate a speech waveform 170 corresponding to a text input 102. The text input 102 may be a sentence that contains one or more words, one or more phrases, and the like.

As shown in FIG. 1, a phone sequence 104 may be identified from the text input 102 by various prior art, such as Letter-to-Sound (LTS). The identified phone sequence 104 may be converted into a phone embedding vector sequence through a phone embedding model 106. The phone embedding vector sequence includes a set of phone embedding vectors, each phone embedding vector corresponding to a phone in the phone sequence 104.

The phone embedding vector sequence may be provided as an input to an encoder 110 of the neural TTS system 100. The encoder 110 may be based on various network structures. As an example, the encoder 110 may include one or more convolution layers 112 and at least one bidirectional Long Short Term Memory (BLSTM) layer 114. The encoder 110 may convert information contained in the phone embedding vector sequence into a vector space that is more robust and more suitable for learning alignment with acoustic features output by a decoder. For example, the encoder 110 may convert the phone embedding vector sequence into a phone feature 120 in the vector space. Herein, a feature generated by the encoder corresponding to the phone sequence of the text input is referred to as the phone feature. It should be appreciated that in other implementations, the phone embedding model 106 for converting the phone sequence into the phone embedding vector sequence may also be trained or updated in association with the neural TTS system 100. In this case, the phone embedding model 106 may be located inside the neural TTS system 100, for example, inside the encoder 110.

It should be appreciated that as an alternative to identifying the phone sequence, a character sequence may also be identified from the text input 102, and the identified character sequence may be further converted into a character embedding vector sequence. The character embedding vector sequence may also be provided as an input to the encoder 110 to generate a character sequence-based character feature corresponding to the text input 102.

The neural TTS system 100 may include an attention unit 130. The attention unit 130 may apply an attention mechanism which acts as a bridge connecting the encoder 110 and the decoder 140. For example, the attention mechanism may facilitate to make alignment between phone features output by the encoder 110 and acoustic features 150 output by the decoder. Various types of attention mechanism may be applied by the attention unit 130, e.g., soft attention, hard attention, location sensitive attention, Gaussian Mixture Model (GMM) attention, etc.

The decoder 140 may include a pre-net 142 consisted of feed-forward layers, Long Short Term Memories (LSTMs) 144, a linear projection 146, a post-net 148 consisted of convolution layers, etc. The LSTMs 144 may receive an input from the pre-net 142 and provide its output to the linear projection 146 while the processing by the LSTMs 144 is affected by the attention unit 130. The linear projection 146 may provide its output to the pre-net 142 and the post-net 148, respectively. Finally, the output of the post-net 148 is combined with the output of the linear projection 146 to produce the acoustic features 150. In an implementation, the linear projection 146 may also be used to generate stop tokens.

The neural TTS system 100 may also include a vocoder 160. The vocoder 160 may generate a speech waveform 170 based on the acoustic features 150 output by the decoder 140. The vocoder 160 may be based on various network structures, such as a Wavenet vocoder, a Griffin-Lim vocoder, etc.

The traditional neural TTS system 100 in FIG. 1 generates the speech waveform corresponding to the text input based only on the phone feature corresponding to the phone sequence of the text input. In order to enhance naturalness of the generated speech, such as speech rates, tones, prosodies, emotions or pleasantness, etc., the embodiments of the present disclosure propose to use both the phone feature and context features of the text input to generate the speech waveform corresponding to the text input. Compared to the traditional neural TTS system 100 in FIG. 1, the embodiments of the present disclosure at least improve an input portion of the decoder in the neural TTS system. FIG. 2 illustrates an exemplary neural TTS system 200 according to an embodiment of the present disclosure.

As shown in FIG. 2, a phone sequence 204 may be identified from a text input 202. The identified phone sequence 204 may be converted into a phone embedding vector sequence through a phone embedding model 206. The phone embedding model 206 may correspond to the phone embedding model 106 in FIG. 1. The phone embedding vector sequence may be provided as an input to an encoder 208 of the neural TTS system 200. The encoder 208 may correspond to the encoder 110 in FIG. 1. The encoder 208 may generate a phone feature 210 based on the phone embedding vector sequence.

In addition to generating the phone feature 210 of the text input 202, context features 218 of the text input 202 are also generated by the neural TTS system 200 according to the embodiments of the present disclosure. A set of sentences associated with the text input 202 are obtained, such as a paragraph 212 in which the text input 202 is located. Context information 214 is extracted from the paragraph 212, such as a word sequence of the text input 202, a word sequence and acoustic features of text adjacent to the text input 202, position information of the text input 202, etc. The context features 218 are generated based on the context information 214 through a feature generating unit 216. The feature generating unit 216 may have different structures for different context information. For example, when the context information 214 is the word sequence of the text input 202, the feature generating unit 216 may include a word embedding model, an up-sampling unit, an encoder, etc. The feature generating unit 216 may all be located inside the neural TTS system 200, or only a portion inside the neural TTS system 200.

The generated phone feature 210 and context features 218 may be combined into mixed features through a cascading unit 220. An attention unit 222 may apply an attention mechanism on the mixed features, such as a location sensitive attention mechanism. The attended mixed features may be provided to a decoder 224. The decoder 224 may correspond to the decoder 140 in FIG. 1. The decoder 224 may generate, based on the attended mixed features, acoustic features corresponding to the mixed features. The acoustic features may then be provided to a vocoder 226. The vocoder 226 may correspond to the vocoder 160 in FIG. 1. A speech waveform 170 corresponding to the text input 202 is generated by the vocoder 226.

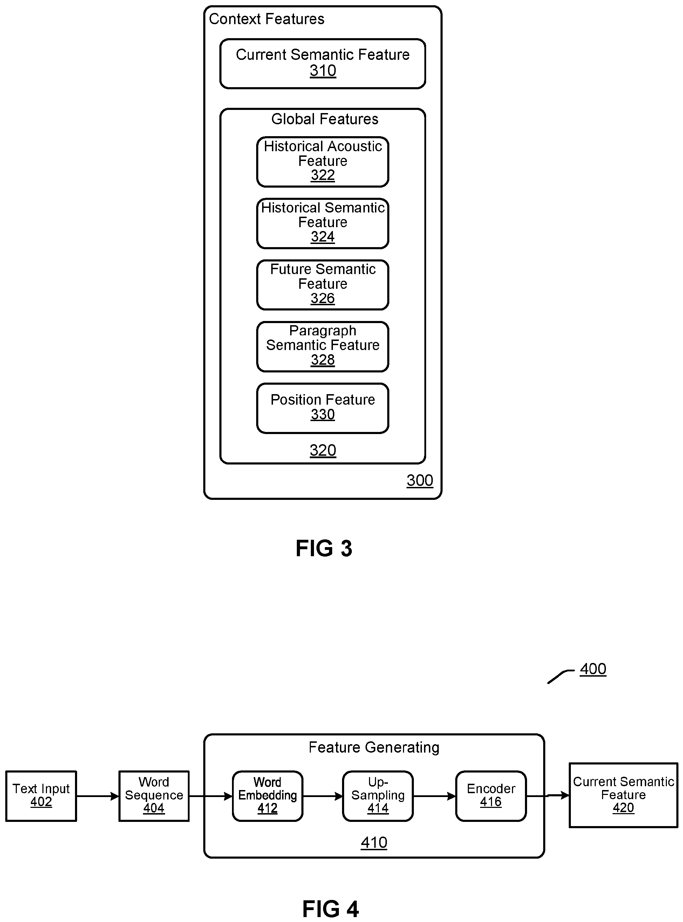

FIG. 3 is a schematic diagram illustrating context features 300 according to an embodiment of the present disclosure. The context features 300 may correspond to the context features 218 in FIG. 2, which may include multiple levels of features.

The context features 300 may include a current semantic feature 310. Herein, the current semantic feature refers to a feature generated based on a word sequence of a text input, such as a current sentence, which may reflect or contain semantic information of the current sentence. A specific process for generating the current semantic feature will be described later in conjunction with FIG. 4.

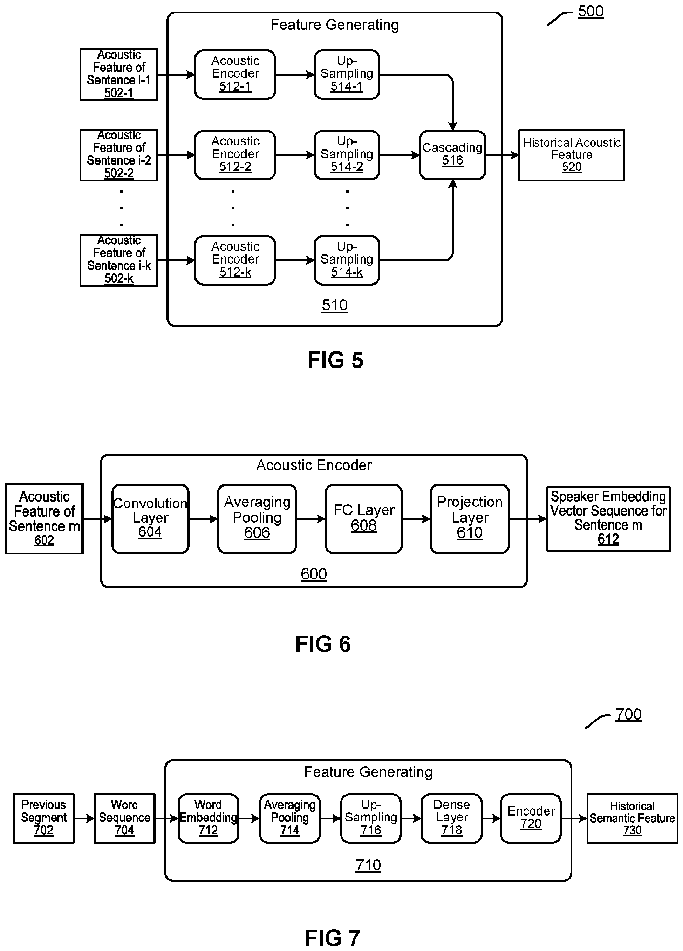

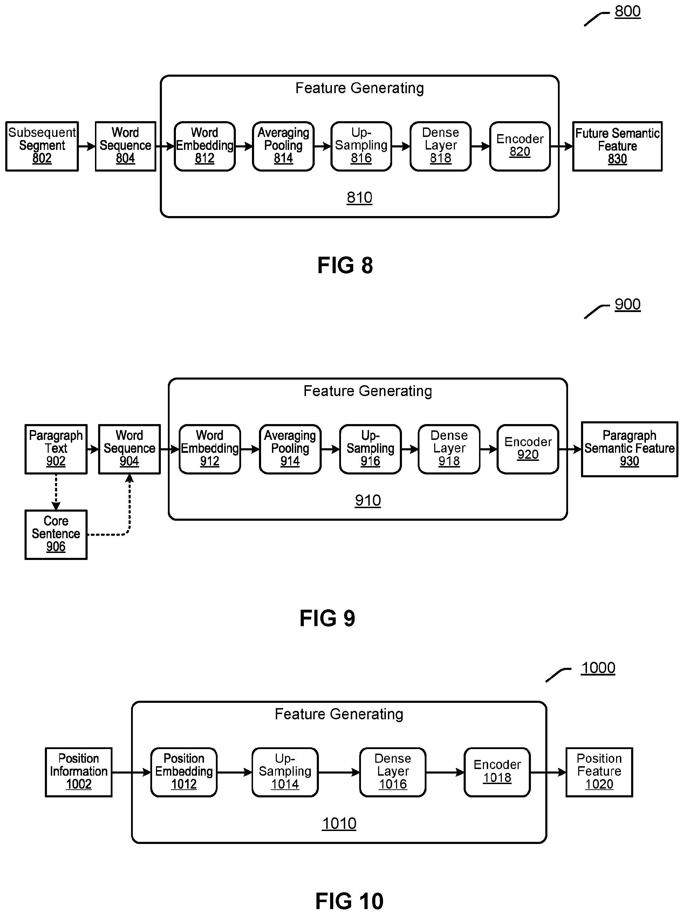

The context features 300 may also include global features 320. The global features 320 may include historical and future context features of a text input, such as a historical acoustic feature 322, a historical semantic feature 324, a future semantic feature 326, a paragraph semantic feature 328, a position feature 330, etc. Herein, the historical acoustic feature refers to a feature generated based on acoustic features of previous sentences of the text input, which may reflect or contain acoustic information related to a way of expression and an acoustic state of a speaker when speaking the previous sentences. A specific process for generating the historical acoustic feature will be described later in conjunction with FIG. 5. The historical semantic feature refers to a feature generated based on a word sequence of a previous segment of the text input, which may reflect or contain semantic information of the previous segment. A specific process for generating the historical semantic feature will be described later in conjunction with FIG. 7. The future semantic feature refers to a feature generated based on a word sequence of a subsequent segment of the text input, which may reflect or contain semantic information of the subsequent segment. A specific process for generating the future semantic feature will be described later in conjunction with FIG. 8. The paragraph semantic feature refers to a feature generated based on a word sequence of a paragraph in which the text input is located, which may reflect or contain semantic information of the paragraph, such as a central idea of the paragraph. A specific process for generating the paragraph semantic feature will be described later in conjunction with FIG. 9. The position feature refers to a feature that is generated based on position information of the text input in the paragraph, which may reflect a position of the text input in the paragraph. A specific process for generating the paragraph semantic feature will be described later in conjunction with FIG. 10.

Referring back to FIG. 2, after being cascaded, both the phone feature and the context features of the text input are successively provided to the attention unit and the decoder. It should be appreciated that the context features 218 of FIG. 2 may include any one or more of the context features described with reference to FIG. 3. For example, the context features 218 may include only the current semantic feature, the historical acoustic feature, and the historical semantic feature.

FIG. 4 illustrates an exemplary process 400 for generating a current semantic feature according to an embodiment of the present disclosure. A word sequence 404 may be identified from a text input 402. The word sequence 404 is a list of sequential words constituting the text input 402.

A current semantic feature 420 may be generated based on the word sequence 404 through a feature generating unit 410. The feature generating unit 410 may correspond to the feature generating unit 216 in FIG. 2. The feature generating unit 410 may include a word embedding model 412, an up-sampling unit 414, and an encoder 416.

The word embedding model 412 may be based on Natural Language Processing (NLP) techniques, such as Neural Machine Translation (NMT). Both the word embedding model and the neural TTS system have similar sequence-to-sequence encoder-decoder frameworks, this would benefit to network convergence. In one embodiment, a Bidirectional Encoder Representations from Transformers (BERT) model may be employed as the word embedding model. A word embedding vector sequence may be generated based on the word sequence 404 through the word embedding model 412, wherein each word has a corresponding embedding vector, and all of these embedding vectors form the word embedding vector sequence. The word embedding vector contains meaning and semantic context information of a word, which will facilitate improvement of naturalness of a generated speech. In addition, the word embedding vector will also facilitate solving a word break problem of speech generation for Chinese text.

The word embedding vector sequence may be up-sampled through the up-sampling unit 414 to align with a phone sequence of the text input 402. For example, a word may be pronounced using one or more phones. Thus, during up-sampling, each word embedding vector in the word embedding vector sequence may be repeated a number of times corresponding to a number of phones of the word. The up-sampled word embedding vector sequence may be provided to the encoder 416. The encoder 416 may have a similar network structure as the encoder 110 of FIG. 1, including, for example, one or more convolution layers and at least one BLSTM layer. The encoder 416 may generate the current semantic feature 420 based on the up-sampled word embedding vector sequence.

FIG. 5 illustrates an exemplary process 500 for generating a historical acoustic feature according to an embodiment of the present disclosure. Acoustic features corresponding to at least one previous sentence located before a text input may be obtained. In a training phase, ground truth acoustic features of the previous sentences may be used. In a predicting phase, predicted acoustic features of the previous sentences may be used. The acoustic features may include various traditional TTS acoustic features, such as mel-spectrum, LSP, etc. Assuming that the text input is sentence *i*, acoustic features 502-1, 502-2, ..., 502-*k* corresponding to sentence *i*-1, sentence *i*-2, ... sentence *i-k*, respectively, may be obtained. In one embodiment, acoustic features corresponding to two sentences located before the text input may be obtained, i.e. *k*=2. A historical acoustic feature 550 may be generated based on the acoustic features 502-1, 502-2, ..., 502-kthrough a feature generating unit 510. The feature generating unit 510 may correspond to the feature generating unit 216 in FIG. 2. The feature generation unit 510 may include acoustic encoders 512-1, 512-2, ..., 512-*k* and up-sampling units 514-1, 514-2, ..., 514-*k* corresponding to the acoustic features 502-1, 502-2, ..., 502-*k*, respectively, as well as a cascading unit 516.

The respective acoustic features 502-1, 502-2, ..., 502-*k* may be converted to speaker embedding vector sequences for the sentence *i*-1, sentence i-2, ..., sentence *i-k* through acoustic encoders 512-1, 512-2, ... 512-*k*, respectively. An exemplary implementation of the acoustic encoder will be described later in conjunction with FIG. 6. The speaker embedding vector sequences for the respective sentences may be up-sampled through up-sampling units 514-1, 514-2, ..., 514-*k*, respectively, to align with the phone sequence of the sentence *i*. For example, the speaker embedding vector sequences of the respective sentences may be repeated a number of times corresponding to a number of phones of the sentence *i*. The respective up-sampled speaker embedding vector sequences may be combined into a historical acoustic feature 520 through a cascading unit 516.

FIG. 6 illustrates an exemplary implementation of an acoustic encoder 600 according to an embodiment of the present disclosure. The acoustic encoder 600 may correspond to any of the acoustic encoders 512-1, 512-2, ..., 512-*k* in FIG. 5. As shown in FIG. 6, the acoustic encoder 600 may be based on a neural network for generating a speaker embedding vector sequence 612 for sentence *m* based on a acoustic feature 602 of the sentence *m.* The acoustic encoder 600 may include successively a plurality of convolution layers 604, an average pooling layer 606, a plurality of Fully Connected (FC) layers 608, and a projection layer 610. The acoustic encoder 600 may extract, from an acoustic feature of a previous sentence, acoustic information related to a way of expression and an acoustic state of a speaker when speaking the previous sentence. Generally, the way of expression and the acoustic state adopted by the speaker in speaking are inertial, that is, there is continuity in physical properties. When generating a speech waveform corresponding to a current sentence, considering the acoustic features of the previous sentences may facilitate to enhance the naturalness of the speech waveform of the current sentence.

FIG. 7 illustrates an exemplary process 700 for generating a historical semantic feature according to an embodiment of the present disclosure. A previous segment 702 before a text input may be obtained. The previous segment 702 may include, for example, one or more sentences before the text input. A word sequence 704 may be identified from the previous segment 702.

A historical semantic feature 730 may be generated based on the word sequence 704 through a feature generating unit 710. The feature generating unit 710 may correspond to the feature generating unit 216 in FIG. 2. The feature generating unit 710 may include a word embedding model 712, an average pooling layer 714, an up-sampling unit 716, a dense layer 718, and an encoder 720.

The word embedding model 712 may generate a word embedding vector sequence based on the word sequence 704. The average pooling layer 714 performs averaging pooling on the word embedding vector sequence to generate an average segment embedding vector sequence. The average segment embedding vector sequence may be up-sampled through the up-sampling unit 716 to align with a phone sequence of the text input. For example, the average segment embedding vector sequence may be repeated a number of times corresponding to a number of phones of the text input. A compressed representation of the average segment embedding vector sequence may then be obtained through the dense layer 718. The compressed representation may be provided to the encoder 720 to generate a historical semantic feature 730. The encoder 720 may have a similar network structure as the encoder 110 of FIG. 1, including, for example, one or more convolution layers and at least one BLSTM layer.

In an implementation, the previous segment 702 may include several complete sentences. For example, a number of sentences included in the previous segment 702 may be determined based on a number of characters that the word embedding model 712 may process. Taking the BERT model as a word embedding model as an example, if the number of characters that the BERT model may process is 512, one or more sentences before the text input having a total number of characters not exceeding 512 may be selected as the previous segment 702.

FIG. 8 illustrates an exemplary process 800 for generating a future semantic feature according to an embodiment of the present disclosure. A subsequent segment 802 after a text input may be obtained. The subsequent segment 802 may include, for example, one or more sentences after the text input. A word sequence 804 may be identified from the subsequent segment 802.

A future semantic feature 830 may be generated based on the word sequence 804 through a feature generating unit 810. The feature generating unit 810 may correspond to the feature generating unit 216 in FIG. 2. The feature generating unit 810 may include a word embedding model 812, an average pooling layer 814, an up-sampling unit 816, a dense layer 818, and an encoder 820.

The word embedding model 812 may generate a word embedding vector sequence based on the word sequence 804. The average pooling layer 814 performs averaging pooling on the word embedding vector sequence to generate an average segment embedding vector sequence. The average segment embedding vector sequence may be up-sampled through the up-sampling unit 816 to align with a phone sequence of the text input. For example, the average segment embedding vector sequence may be repeated a number of times corresponding to a number of phones of the text input. A compressed representation of the average segment embedding vector sequence may then be obtained through the dense layer 818. The compressed representation may be provided to the encoder 820 to generate a future semantic feature 830. The encoder 820 may have a similar network structure as the encoder 110 of FIG. 1, including, for example, one or more convolution layers and at least one BLSTM layer.

In an implementation, the subsequent segment 802 may include several complete sentences. Similar to the previous segment 702, a number of sentences included in the subsequent segment 802 may be determined, for example, based on a number of characters that the word embedding model 812 may process. In another implementation, the subsequent segments 802 may include only one sentence, i.e., a sentence immediately after the text input.

FIG. 9 illustrates an exemplary process 900 for generating a paragraph semantic feature according to an embodiment of the present disclosure. Paragraph text 902 of a paragraph in which a text input is located may be obtained. In an implementation, a word sequence 904 may be identified directly from the paragraph text 902. In another implementation, a core sentence 906 may be extracted from the paragraph text 902 and then the word sequence 904 may be identified from the core sentence 906. The core sentence 906 may be extracted from the paragraph text 902 by various techniques, such as using a context relationship-based summary (CRSums) model.

A paragraph semantic feature 930 may be generated based on the word sequence 904 through a feature generating unit 910. The feature generating unit 910 may correspond to the feature generating unit 216 in FIG. 2. The feature generating unit 910 may include a word embedding model 912, an average pooling layer 914, an up-sampling unit 916, a dense layer 918, and an encoder 920.

The word embedding model 912 may generate a word embedding vector sequence based on the word sequence 904. The average pooling layer 914 performs averaging pooling on the word embedding vector sequence to generate an average paragraph embedding vector sequence. The average paragraph embedding vector sequence may be up-sampled through the up-sampling unit 916 to align with a phone sequence of the text input. For example, the average paragraph embedding vector sequence may be repeated a number of times corresponding to a number of phones of the text input. A compressed representation of the average paragraph embedding vector sequence may then be obtained through the dense layer 918. The compressed representation may be provided to the encoder 920 to generate a paragraph semantic feature 930. The encoder 920 may have a similar network structure as the encoder 110 of FIG. 1, including, for example, one or more convolution layers and at least one BLSTM layer.

FIG. 10 illustrates an exemplary process 1000 for generating a position feature according to an embodiment of the present disclosure. Position information 1002 of a text input in a paragraph may be extracted, such as information on the text input is which sentence from the beginning of the paragraph, information on the text input is which sentence from the end of the paragraph, and the like.

A position feature 1020 may be generated based on the position information 1002 through a feature generating unit 1010. The feature generating unit 1010 may correspond to the feature generating unit 216 in FIG. 2. The feature generating unit 1010 may include a position embedding model 1012, an up-sampling unit 1014, a dense layer 1016, and an encoder 1018.

A position embedding vector sequence may be generated based on the position information 1002 through the position embedding model 1012. The position embedding vector sequence may be up-sampled through the up-sampling unit 1014 to align with a phone sequence of the text input. For example, the position embedding vector sequence may be repeated a number of times corresponding to a number of phones of the text input. A compressed representation of the up-sampled position embedding vector sequence may then be obtained through the dense layer 1016. The compressed representation may be provided to the encoder 1018 to generate a position feature 1020. The encoder 1018 may have a similar network structure as the encoder 110 of FIG. 1, including, for example, one or more convolution layers and at least one BLSTM layer.

The position feature generated based on the position information may reflect a position of the text input in the paragraph. In general, the position of the text input in the paragraph may affect a tone of speech corresponding to the text input. For example, when the text input is at the beginning of the paragraph, its tone tends to be high; when the text input is in the middle of the paragraph, its tone tends to be flat; and when the text input is at the end of the paragraph, its tone tends to be high. Therefore, when generating the speech of the text input, considering the position information of the text input facilitates enhancement of the naturalness of the generated speech.

It should be appreciated that the processes 400-500, 700-1000 in FIGs. 4-5, 7-10 are merely examples of processes for generating various context features. The process for generating context features may include any other steps, and may include more or fewer steps, depending on actual application requirements. For example, although in the processes 700-1000 of FIGs. 7-10, the dense layer is employed to obtain the compressed representation of the embedding vector sequence and the compressed representation is provided to the encoder, in some embodiments, the embedding vector sequence may be provided directly to the encoder without being processed by the dense layer.

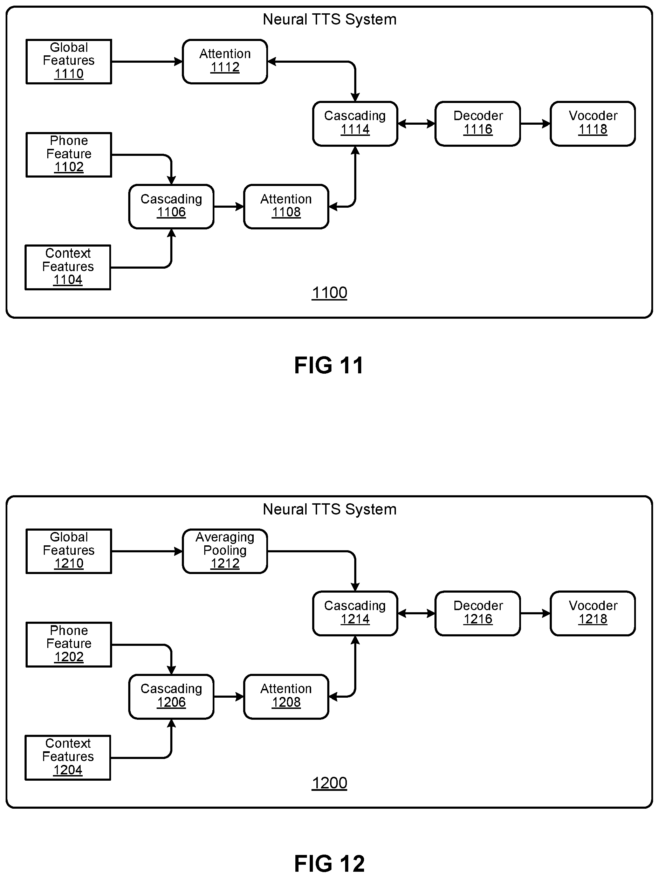

Referring back to FIG. 2, the context features are provided to the attention unit and the decoder after being cascaded with the phone feature. In order to enhance the influence of the context features on the decoder, especially the influence of the global features on the decoder, the embodiments of the present disclosure also propose to apply the attention mechanism separately on the global features, and directly apply the attended global features to the decoder. FIG. 11 illustrates another exemplary neural TTS system 1100 according to an embodiment of the present disclosure.

As shown in FIG. 11, a phone feature 1102 and context features 1104 of a text input may be combined into a first mixed feature through a cascading unit 1106. The phone feature 1102 may correspond to the phone feature 120 in FIG. 1. The context features 1104 may correspond to the context features 300 in FIG. 3, for example, including: a current semantic feature and global features, wherein the global features may include at least one of a historical acoustic feature, a historical semantic feature, a future semantic feature, a paragraph semantic feature, and a position feature, etc. An attention unit 1108 may apply an attention mechanism on the first mixed features, such as a location sensitive attention mechanism.

Moreover, an attention mechanism may be applied separately on global features 1110. For example, the global features 1110 may be provided to an attention unit 1112. The global features 1110 may correspond to the global features 320 in FIG. 3, for example, including at least one of a historical acoustic feature, historical semantic feature, a future semantic feature, a paragraph semantic feature, and a position feature. The attention unit 1112 may apply an attention mechanism on the global features 1110, such as a location sensitive attention mechanism. The attended global features may be cascaded 1114 with the first attended mixed features to obtain the second mixed features. The second mixed features may be provided to a decoder 1116. The decoder 1116 may correspond to the decoder 140 in FIG. 1. The decoder 1116 may generate acoustic features corresponding to the second mixed features. The acoustic features may then be provided to a vocoder 1118 to generate a speech waveform corresponding to the text input.

It should be appreciated that the context features 1104 in FIG. 11 may include some or all of the context features described with reference to FIG. 3, for example, the context features 1104 may include only the current semantic feature, the historical acoustic feature, and the historical semantic feature. Moreover, the global features 1110 in FIG. 11 may include some or all of the global features described with reference to FIG. 3, for example, the global features 1110 may include only the historical acoustic feature and the historical semantic feature.

FIG. 12 illustrates yet another exemplary neural TTS system 1200 according to an embodiment of the present disclosure. As shown in FIG. 12, a phone feature 1202 and context features 1204 of the text input may be combined into a first mixed feature through a cascading unit 1206. The phone feature 1202 may correspond to the phone feature 120 in FIG. 1. The context features 1204 may correspond to the context features 300 in FIG. 3, for example, including: a current semantic feature and global features, wherein the global features may include at least one of a historical acoustic feature, a historical semantic feature, a future semantic feature, a paragraph semantic feature, and position feature, etc. An attention unit 1208 may apply an attention mechanism on the first mixed features, such as a location sensitive attention mechanism.

In addition, averaging pooling 1112 may be performed on global features 1210 to obtain average global features. The global features 1210 may correspond to the global features 320 in FIG. 3, for example, including at least one of a historical acoustic feature, a historical semantic feature, a future semantic feature, a paragraph semantic feature, and a position feature. The average global features may be cascaded 1214 with the first attended mixed features to obtain second mixed features. The second mixed features may be provided to a decoder 1216. The decoder 1216 may correspond to the decoder 140 in FIG. 1. The decoder 1216 may generate, based on the second mixed features, acoustic features corresponding to the second mixed features. The acoustic features may then be provided to a vocoder 1218 to generate a speech waveform corresponding to the text input.

It should be appreciated that the context features 1204 in FIG. 12 may include some or all of the context features described with reference to FIG. 3, for example, the context features 1204 may include only the current semantic feature, the historical acoustic feature, and the historical semantic feature. Moreover, the global features 1210 in FIG. 12 may include some or all of the global features described with reference to FIG. 3, for example, the global features 1210 may include only the historical acoustic feature and the historical semantic feature.

The exemplary neural TTS systems according to the embodiments of the disclosure are described above with reference to FIGs. 2, 11, and 12, and the exemplary methods for generating speech through neural TTS synthesis according to the embodiments of the present disclosure are described accordingly. The above systems and methods intend to generate speech corresponding to a text input based on both a phone feature and context features of the text input. It should be appreciated that the above systems and methods are exemplary, and the present disclosure is not limited thereto, but other neural TTS systems may be implemented in a similar manner and other methods based on the phone feature and context features may be used to generate speech.

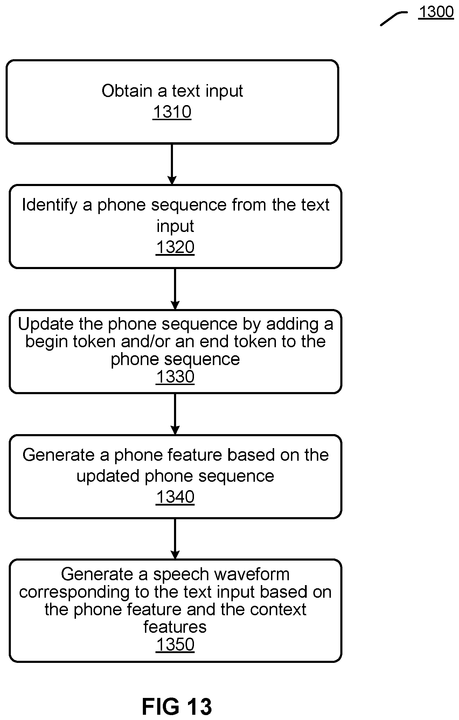

Traditional methods, when generating a speech waveform for a set of sentences, such as a paragraph, usually generates a corresponding speech waveform for each sentence in this set of sentences, and then combines all the generated speech waveforms, thereby obtaining the speech waveform corresponding to this set of sentences. More specifically, when combining the speech waveforms, pause durations between respective speech waveforms corresponding to respective sentences are set to be the same or fixed. In order to obtain speech with more abundant and natural rhythm between sentences, the embodiments of the present disclosure further improve the method for generating speech through neural TTS synthesis. FIG. 13 is a flowchart 1300 of an exemplary method for generating speech through neural TTS synthesis according to an embodiment of the present disclosure. The method may model pauses between sentences and determine pause durations between the sentences based on context features.

At step 1310, a text input may be obtained.

At step 1320, a phone sequence may be identified from the text input, such as a current sentence, by various techniques such as LTS.

At step 1330, the phone sequence may be updated by adding a begin token and/or an end token to the beginning and/or the end of the phone sequence, respectively. In an implementation, a mute phone may be used as the begin token and the end token.

At step 1340, a phone feature may be generated based on the updated phone sequence. For example, the updated phone sequence may be converted into a phone embedding vector sequence through a phone embedding model. The phone embedding vector sequence may then be provided to an encoder, such as the encoder 110 in FIG. 1, to generate the phone feature corresponding to the updated phone sequence.

At step 1350, a speech waveform corresponding to the text input may be generated based on the phone feature and context features. The speech waveform may be generated in a variety of ways.

In an implementation, as shown in FIG. 2, the phone feature and the context features may be combined into mixed features, and the mixed features may be provided successively to an attention unit and a decoder to generate acoustic features corresponding to the mixed features. The acoustic features may then be provided to a vocoder to generate the speech waveform corresponding to the text input.

In another implementation, as shown in FIG. 11, the phone feature and the context features may be combined into first mixed features, and the first mixed features may be provided to an attention unit to obtain first attended mixed features. At the same time, global features in the context features may be cascaded with the first attended mixed features after passing its own attention unit, thereby obtaining second mixed features. The second mixed features may be provided to a decoder to generate acoustic features corresponding to the second mixed features. The acoustic features may then be provided to a vocoder to generate the speech waveform corresponding to the text input.

In yet another implementation, as shown in FIG. 12, the phone feature and the context features may be combined into first mixed features, and the first mixed features may be provided to the attention unit to obtain first attended mixed features. Meanwhile, averaging pooling may be performed on global features in the context features to obtain average global features. The average global features may be cascaded with the first attended mixed features to obtain second mixed features. The second mixed features may be provided to a decoder to generate acoustic features corresponding to the second mixed features. The acoustic features may then be provided to a vocoder to generate the speech waveform corresponding to the text input.

Since mute phones are added as the begin token and/or the end token at the beginning and/or the end of the phone sequence of the text input, respectively, the generated speech waveform corresponding to the text input has a period of mute at the beginning and/or the end, respectively. Since the context features are taken into account when generating the speech waveform, the mute at the beginning and/or the end of the speech waveform is related to the context features, which may vary with the context features. For example, the mute at the end of the speech waveform of the text input and the mute at the beginning of a speech waveform of a next sentence of the text input constitute a pause between the text input and the next sentence. The duration of the pause may accordingly vary with the context features, such that the rhythm of the generated speech corresponding to a set of sentences is more abundant and natural.

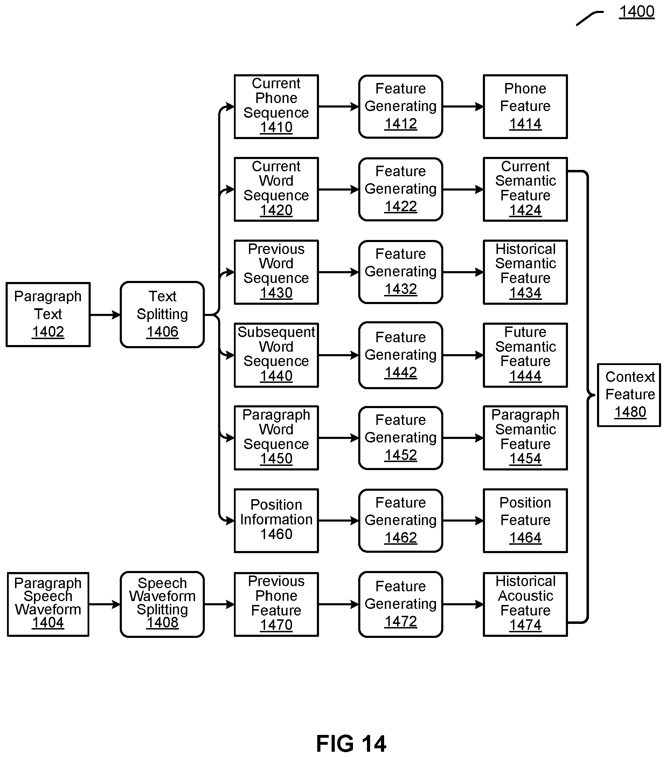

FIG. 14 illustrates an exemplary process 1400 for generating training data of a neural TTS system according to an embodiment of the present disclosure. As described above, the neural TTS system according to the embodiment of the present disclosure may use both a phone feature and context features of a text input to generate a speech waveform corresponding to the text input. Accordingly, the generating of the training data of the neural TTS system according to the embodiment of the present disclosure includes generating of the phone feature and generating of the context features.

Firstly, a paragraph text 1402 and a paragraph speech waveform 1404 corresponding to the paragraph text 1402 may be obtained.

At 1406, the paragraph text 1402 may be split into a plurality of sentences.

At 1408, the paragraph speech waveform 1404 may be split into a plurality of speech waveforms corresponding to the plurality of sentences in the paragraph text 1402. At the time of splitting, pauses between the sentences may be reserved. For example, a pause between two adjacent speech waveforms may be split into two portions, with the first portion attached to the end of the previous speech waveform and the latter portion attached to the beginning of the latter speech waveform.

The plurality of sentences obtained from the paragraph text 1402 may correspond to the plurality of speech waveforms obtained from the paragraph speech waveform 1404 one by one, forming a plurality of training data pairs, such as [sentence 1, speech waveform 1], [sentence 2, speech waveform 2 ], [sentence 3, speech waveform 3], etc. These training data pairs may be used to construct a training corpus.

A text input, such as a current sentence, may be identified from the training corpus and a current phone sequence 1410 may be identified from the text input. A phone feature 1414 may be generated based on the identified current phone sequence 1410 through feature generating 1412. The phone feature 1414 may be generated, for example, by using the approach of generating the phone feature 120 based on the phone sequence 104 described with reference to FIG. 1.

A current word sequence 1420 may be identified from the text input. A current semantic feature 1424 may be generated based on the identified current word sequence 1420 through feature generating 1422. The current semantic feature 1424 may be generated, for example, by using the approach of generating the current semantic feature 420 based on the word sequence 404 described with reference to FIG. 4.

A previous segment located before the text input may be identified from the training corpus, and a previous word sequence 1430 may be identified from the previous segment. A historical semantic feature 1434 may be generated based on the identified previous word sequence 1430 through feature generating 1432. The historical semantic feature 1434 may be generated, for example, by using the approach of generating the historical semantic feature 730 based on the word sequence 704 described with reference to FIG. 7.

A subsequent segment located after the text input may be identified from the training corpus, and a subsequent word sequence 1440 may be identified from the subsequent segment. A future semantic feature 1444 may be generated based on the identified subsequent word sequence 1440 through feature generating 1442. The future semantic feature 1444 may be generated, for example, by using the approach of generating the future semantic features 830 based on the word sequence 804 described with reference to FIG. 8.

A plurality of sentences in a paragraph in which the text input is located may be identified from the training corpus, and a paragraph word sequence 1450 may be identified from the plurality of sentences. In an implementation, a paragraph word sequence 1450 may be identified directly from the plurality of sentences in the paragraph. In another implementation, a core sentence may be extracted from the plurality of sentences in the paragraph, and then the paragraph word sequence 1450 may be identified from the extracted core sentence. A paragraph semantic feature 1454 may be generated based on the identified paragraph word sequence 1450 through feature generating 1452. The paragraph semantic feature 1454 may be generated, for example, by using the approach of generating the paragraph semantic feature 930 based on the word sequence 904 described with reference to FIG. 9.

Position information 1460 of the text input in the paragraph in which it is located may be obtained through the training corpus. A Position feature 1464 may be generated based on the extracted position information 1460 through feature generating 1462. The position feature 1464 may be generated, for example, by using the approach of generating the position feature 1020 based on the position information 1002 described with reference to FIG. 10.

At least one previous acoustic feature 1470 corresponding to at least one previous sentence before the text input may also be obtained through the training corpus. It is to be noted that the at least one previous acoustic feature is a ground truth acoustic feature. Taking the text input being sentence *i* as an example, the at least one previous acoustic feature of the text input may be at least one acoustic feature corresponding to at least one speech waveform of at least one sentence before the text input, such as at least one acoustic feature corresponding to speech waveform *i*-1 of sentence *i*-1, speech waveform *i*-2 of sentence *i*-2, ..., speech waveform *i-k* of sentence *i-k.* A historical acoustic feature 1474 may be generated based on the obtained at least one previous acoustic feature 1470 through feature generating 1472. The historical acoustic feature 1474 may be generated, for example, by using the approach of generating the historical acoustic feature 520 based on the acoustic features 502-1, 502-2, ..., 502-*k* described with reference to FIG. 5.

The current semantic feature 1424, historical semantic feature 1434, future semantic feature 1444, paragraph semantic feature 1454, position feature 1464, and historical acoustic feature 1474 generated by the approach described above may be combined into context features 1480.

The phone feature 1414 and context features 1480 generated according to the process illustrated in FIG. 14 may be used to train the neural TTS systems according to the embodiments of the present disclosure, such as the neural TTS system 200 in FIG. 2, the neural TTS system 1100 in FIG. 11, or the neural TTS system 1200 in FIG. 12.

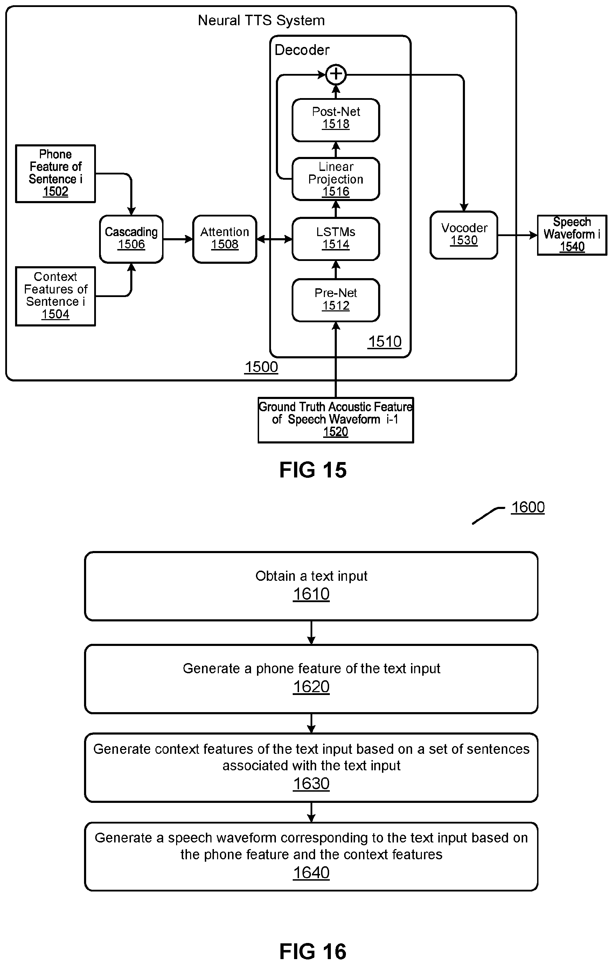

FIG. 15 illustrates an exemplary process for training a neural TTS system 1500 according to an embodiment of the present disclosure. The neural TTS system 1500 may correspond to the neural TTS system 200 in FIG. 2. The neural TTS system 1500 may include at least a cascading unit 1506, an attention unit 1508, a decoder 1510, and a vocoder 1530. The cascading unit 1506, the attention unit 1508, the decoder 1510, and the vocoder 1530 may correspond to the cascading unit 220, the attention unit 222, the decoder 224, and the vocoder 226, respectively, in FIG. 2.

Taking training the neural TTS system 1500 using a training data pair [sentence *i*, voice waveform *i*] as an example, a phone feature 1502 and context features 1504 of the sentence *i* may be obtained firstly. The phone feature 1502 and the context features 1504 of the sentence *i* may be generated, for example, by the approach shown in FIG. 14.

The phone feature 1502 and the context features 1504 of the sentence *i* may be combined into mixed features through the cascading unit 1506, which may be further processed by the attention unit 1508, the decoder 1510, and the vocoder 1530, to generate a speech waveform *i* 1540 corresponding to the sentence *i*. The decoder 1510 may include a pre-net 1512, LSTMs 1514, a linear projection 1516, and a post-net 1518. In a training phase, an input of the pre-net 1512 is from a ground truth acoustic feature 1520 corresponding to a previous speech waveform, i.e., speech waveform *i*-1 corresponding to sentence *i*-1.

It should be appreciated that although the foregoing discussion relates to training of the neural TTS system 1500 corresponding to the neural TTS system 200 in FIG. 2, the embodiments of the present disclosure are not limited thereto, but the neural TTS system 1100 in FIG. 11 and the neural TTS system 1200 in FIG. 12 may be trained in a similar manner.

FIG. 16 is a flowchart of an exemplary method 1600 for generating speech through neural TTS synthesis according to an embodiment of the present disclosure.

At step 1610, a text input may be obtained.

At step 1620, a phone feature of the text input may be generated.

At step 1630, context features of the text input may be generated based on a set of sentences associated with the text input.

At step 1640, a speech waveform corresponding to the text input may be generated based on the phone feature and the context features.

In an implementation, the generating the phone feature may comprise: identifying a phone sequence from the text input; and generating the phone feature based on the phone sequence.

In an implementation, the generating the context features may comprise: obtaining acoustic features corresponding to at least one sentence of the set of sentences before the text input; and generating the context features based on the acoustic features.

The generating the context features may further comprise: aligning the context features with a phone sequence of the text input.

In an implementation, the generating the context features may comprise: identifying a word sequence from at least one sentence of the set of sentences; and generating the context features based on the word sequence.

The at least one sentence may comprise at least one of: a sentence corresponding to the text input, sentences before the text input, and sentences after the text input.

The at least one sentence may represent content of the set of sentences.

The generating the context features based on the word sequence may comprise: generating a word embedding vector sequence based on the word sequence; generating an average embedding vector sequence corresponding to the at least one sentence based on the word embedding vector sequence; aligning the average embedding vector sequence with a phone sequence of the text input; and generating the context features based on the aligned average embedding vector sequence.

In an implementation, the generating the context features may comprise: determining a position of the text input in the set of sentences; and generating the context features based on the location.

The generating the context features based on the location may comprise: generating a position embedding vector sequence based on the location; aligning the position embedding vector sequence with a phone sequence of the text input; and generating the context features based on the aligned position embedding vector sequence.

In an implementation, the generating the speech waveform may comprise: combining the phone feature and the context features into mixed features; applying an attention mechanism on the mixed features to obtain attended mixed features; and generating the speech waveform based on the attended mixed features.

In an implementation, the generating the speech waveform may comprise: combining the phone feature and the context features into first mixed features; applying a first attention mechanism on the first mixed features to obtain first attended mixed features; applying a second attention mechanism on at least one context feature of the context features to obtain at least one attended context feature; combining the first attended mixed features and the at least one attended context feature into second mixed features; and generating the speech waveform based on the second mixed features.

In an implementation, the generating the speech waveform may comprise: combining the phone feature and the context features into first mixed features; applying an attention mechanism on the first mixed features to obtain first attended mixed features; performing averaging pooling on at least one context feature of the context features to obtain at least one average context feature; combining the first attended mixed features and the at least one average context feature into second mixed features; and generating the speech waveform based on the second mixed features.

In an implementation, the generating the phone feature may comprise: identifying a phone sequence from the text input; updating the phone sequence by adding a begin token and/or an end token to the phone sequence, wherein the length of the begin token and the length of the end token are determined according to the context features; and generating the phone feature based on the updated phone sequence.

In an implementation, the set of sentences may be in the same paragraph.

It should be appreciated that the method 1600 may further comprise any steps/processes for generating speech through neural TTS synthesis according to the embodiments of the present disclosure as mentioned above.

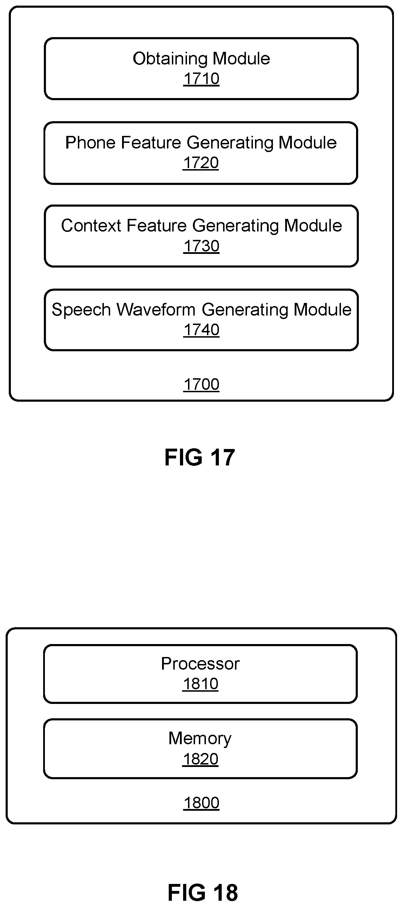

FIG. 17 illustrates an exemplary apparatus 1700 for generating speech through neural TTS synthesis according to an embodiment of the present disclosure. The apparatus 1700 may comprise an obtaining module 1710, for obtaining a text input; a phone feature generating module 1720, for generating a phone feature of the text input; a context feature generating module 1730, for generating context features of the text input based on a set of sentences associated with the text input; and a speech waveform generating module 1740, for generating a speech waveform corresponding to the text input based on the phone feature and the context features.

In an implementation, the context feature generating module 1730 may be further configured for: obtaining acoustic features corresponding to at least one sentence of the set of sentences before the text input; and generating the context features based on the acoustic features.

In an implementation, the context feature generating module 1730 may be further configured for: identifying a word sequence from at least one sentence of the set of sentences; and generating the context features based on the word sequence.

In an implementation, the phone feature generating module 1720 may be further configured for: identifying a phone sequence from the text input; updating the phone sequence by adding a begin token and/or an end token to the phone sequence, wherein the length of the begin token and the length of the end token are determined according to the context features; and generating the phone feature based on the updated phone sequence.

Moreover, the apparatus 1700 may further comprise any other modules configured for generating speech through neural TTS synthesis according to the embodiments of the present disclosure as mentioned above.

FIG. 18 illustrates an exemplary apparatus 1800 for generating speech through neural TTS synthesis according to an embodiment of the present disclosure.

The apparatus 1800 may comprise at least one processor 1810. The apparatus 1800 may further comprise a memory 1820 connected with the processor 1810. The memory 1820 may store computer-executable instructions that, when executed, cause the processor 1810 to perform any operations of the methods for generating speech through neural TTS synthesis according to the embodiments of the present disclosure as mentioned above.

The embodiments of the present disclosure may be embodied in a non-transitory computer-readable medium. The non-transitory computer-readable medium may comprise instructions that, when executed, cause one or more processors to perform any operations of the methods for generating speech through neural TTS synthesis according to the embodiments of the present disclosure as mentioned above.

It should also be appreciated that all the modules in the apparatuses described above may be implemented in various approaches. These modules may be implemented as hardware, software, or a combination thereof. Moreover, any of these modules may be further functionally divided into sub-modules or combined together.

Processors are described in connection with various apparatus and methods. These processors may be implemented using electronic hardware, computer software, or any combination thereof. Whether these processors are implemented as hardware or software will depend on the specific application and the overall design constraints imposed on the system. By way of example, a processor, any portion of a processor, or any combination of processors presented in this disclosure may be implemented as a microprocessor, a microcontroller, a digital signal processor (DSP), a field programmable gate array (FPGA), a programmable logic device (PLD), state machine, gate logic, discrete hardware circuitry, and other suitable processing components configured to perform the various functions described in this disclosure. The functions of a processor, any portion of a processor, or any combination of processors presented in this disclosure may be implemented as software executed by a microprocessor, a microcontroller, a DSP, or other suitable platforms.

Software should be considered broadly to represent instructions, instruction sets, code, code segments, program code, programs, subroutines, software modules, applications, software applications, software packages, routines, subroutines, objects, running threads, processes, functions, and the like. Software may reside on computer readable medium. Computer readable medium may include, for example, a memory, which may be, for example, a magnetic storage device (e.g., a hard disk, a floppy disk, a magnetic strip), an optical disk, a smart card, a flash memory device, a random access memory (RAM), a read only memory (ROM), a programmable ROM (PROM), an erasable PROM (EPROM), an electrically erasable PROM (EEPROM), a register, or a removable disk. Although a memory is shown as being separate from the processor in various aspects presented in this disclosure, a memory may also be internal to the processor (e.g., a cache or a register).

The previous description is provided to enable any person skilled in the art to practice the various aspects described herein. Various modifications to these aspects will be readily apparent to those skilled in the art, and the generic principles defined herein may be applied to other aspects.

## Claims

1. A method (1600) for generating speech through neural text-to-speech (TTS) synthesis, comprising:
obtaining (1610) a text input;
generating (1620) a phone feature of the text input;
generating (1630) context features of the text input based on a set of sentences associated with the text input, comprising:
identifying a word sequence from at least one sentence of the set of sentences; and
generating the context features based on the word sequence, comprising:
generating a word embedding vector sequence based on the word sequence;
generating an average embedding vector sequence corresponding to the at least one sentence based on the word embedding vector sequence;
aligning the average embedding vector sequence with a phone sequence of the text input; and
generating the context features based on the aligned average embedding vector sequence; and
generating (1640) a speech waveform corresponding to the text input based on the phone feature and the context features.

2. The method of claim 1, wherein the generating (1630) the context features comprises:
obtaining acoustic features corresponding to at least one sentence of the set of sentences before the text input; and
generating the context features based on the acoustic features.

3. The method of claim 2, further comprising:
aligning the context features with a phone sequence of the text input.

4. The method of claim 1, wherein the at least one sentence comprises at least one of: a sentence corresponding to the text input, sentences before the text input, and sentences after the text input.

5. The method of claim 1, wherein the at least one sentence represents content of the set of sentences.

6. The method of claim 1, wherein the generating (1630) the context features comprises:
determining a position of the text input in the set of sentences; and
generating the context features based on the location.

7. The method of claim 6, wherein the generating the context features based on the location comprises:
generating a position embedding vector sequence based on the location;
aligning the position embedding vector sequence with a phone sequence of the text input; and
generating the context features based on the aligned position embedding vector sequence.

8. The method of claim 1, wherein the generating (1640) the speech waveform comprises:
combining the phone feature and the context features into mixed features;
applying an attention mechanism on the mixed features to obtain attended mixed features; and
generating the speech waveform based on the attended mixed features.

9. The method of claim 1, wherein the generating (1640) the speech waveform comprises:
combining the phone feature and the context features into first mixed features;
applying a first attention mechanism on the first mixed features to obtain first attended mixed features;
applying a second attention mechanism on at least one context feature of the context features to obtain at least one attended context feature;
combining the first attended mixed features and the at least one attended context feature into second mixed features; and
generating the speech waveform based on the second mixed features.

10. The method of claim 1, wherein the generating (1640) the speech waveform comprises:
combining the phone feature and the context features into first mixed features;
applying an attention mechanism on the first mixed features to obtain first attended mixed features;
performing averaging pooling on at least one context feature of the context features to obtain at least one average context feature;
combining the first attended mixed features and the at least one average context feature into second mixed features; and
generating the speech waveform based on the second mixed features.

11. The method of claim 1, wherein the generating (1620) the phone feature comprises:
identifying a phone sequence from the text input;
updating the phone sequence by adding a begin token and/or an end token to the phone sequence, wherein the length of the begin token and the length of the end token are determined according to the context features; and
generating the phone feature based on the updated phone sequence.

12. An apparatus (1700) for generating speech through neural text-to-speech (TTS) synthesis, comprising:
an obtaining module (1710), for obtaining a text input;
a phone feature generating module (1720), for generating a phone feature of the text input;
a context feature generating module (1730), for generating context features of the text input based on a set of sentences associated with the text input, comprising an arrangement for:
identifying a word sequence from at least one sentence of the set of sentences; and
generating the context features based on the word sequence, comprising:
generating a word embedding vector sequence based on the word sequence;
generating an average embedding vector sequence corresponding to the at least one sentence based on the word embedding vector sequence;
aligning the average embedding vector sequence with a phone sequence of the text input; and
generating the context features based on the aligned average embedding vector sequence; and
a speech waveform generating module (1740), for generating a speech waveform corresponding to the text input based on the phone feature and the context features.

13. An apparatus for generating speech through neural text-to-speech (TTS) synthesis, comprising:
at least one processor; and
a memory storing computer executable instructions that, when executed, cause the at least one processor to:
obtain a text input;
generate a phone feature of the text input;
generate context features of the text input based on a set of sentences associated with the text input, the processor further operable to:
identify a word sequence from at least one sentence of the set of sentences; and
generate the context features based on the word sequence, by:
generating a word embedding vector sequence based on the word sequence;
generating an average embedding vector sequence corresponding to the at least one sentence based on the word embedding vector sequence;
aligning the average embedding vector sequence with a phone sequence of the text input; and
generate the context features based on the aligned average embedding vector sequence; and
generate a speech waveform corresponding to the text input based on the phone feature and the context features.

## Patentansprüche

1. Verfahren (1600) zum Erzeugen von Sprache durch neuronale Text-zu-Sprache-(TTS-) Synthese, umfassend:
Erhalten (1610) einer Texteingabe;
Erzeugen (1620) eines Sprachlautmerkmals der Texteingabe;
Erzeugen (1630) von Kontextmerkmalen der Texteingabe basierend auf einer Satzmenge, die mit der Texteingabe verknüpft ist, umfassend:
Erkennen einer Wortsequenz aus mindestens einem Satz der Satzmenge; und
Erzeugen der Kontextmerkmale basierend auf der Wortsequenz, umfassend:
Erzeugen einer Worteinbettungsvektorsequenz basierend auf der Wortsequenz;
Erzeugen einer durchschnittlichen Einbettungsvektorsequenz, die dem mindestens einen Satz entspricht, basierend auf der Worteinbettungsvektorsequenz;
Abgleichen der durchschnittlichen Einbettungsvektorsequenz mit einer Sprachlautsequenz der Texteingabe; und
Erzeugen der Kontextmerkmale basierend auf der abgeglichenen durchschnittlichen Einbettungsvektorsequenz; und
Erzeugen (1640) einer Sprachwellenform, die der Texteingabe entspricht, basierend auf dem Sprachlautmerkmal und den Kontextmerkmalen.

2. Verfahren nach Anspruch 1, wobei das Erzeugen (1630) der Kontextmerkmale Folgendes umfasst:
Erhalten akustischer Merkmale, die mindestens einem Satz der Satzmenge vor der Texteingabe entsprechen; und
Erzeugen der Kontextmerkmale basierend auf den akustischen Merkmalen.

3. Verfahren nach Anspruch 2, weiter umfassend:
Abgleichen der Kontextmerkmale mit einer Sprachlautsequenz der Texteingabe.

4. Verfahren nach Anspruch 1, wobei der mindestens eine Satz mindestens einen von Folgenden umfasst: einen Satz, der der Texteingabe entspricht, Sätze vor der Texteingabe und Sätze nach der Texteingabe.

5. Verfahren nach Anspruch 1, wobei der mindestens eine Satz den Inhalt der Satzmenge darstellt.

6. Verfahren nach Anspruch 1, wobei das Erzeugen (1630) der Kontextmerkmale Folgendes umfasst:
Bestimmen einer Position der Texteingabe in der Satzmenge; und
Erzeugen der Kontextmerkmale basierend auf der Stelle.

7. Verfahren nach Anspruch 6, wobei das Erzeugen der Kontextmerkmale basierend auf der Stelle Folgendes umfasst:
Erzeugen einer Positionseinbettungsvektorsequenz basierend auf der Stelle;
Abgleichen der Positionseinbettungsvektorsequenz mit einer Sprachlautsequenz der Texteingabe; und
Erzeugen der Kontextmerkmale basierend auf der abgeglichenen Positionseinbettungsvektorsequenz.

8. Verfahren nach Anspruch 1, wobei das Erzeugen (1640) der Sprachwellenform Folgendes umfasst:
Kombinieren des Sprachlautmerkmals und der Kontextmerkmale zu gemischten Merkmalen;
Anwenden eines Aufmerksamkeitsmechanismus auf die gemischten Merkmale, um beachtete gemischte Merkmale zu erhalten; und
Erzeugen der Sprachwellenform basierend auf den beachteten gemischten Merkmalen.

9. Verfahren nach Anspruch 1, wobei das Erzeugen (1640) der Sprachwellenform Folgendes umfasst:
Kombinieren des Sprachlautmerkmals und der Kontextmerkmale zu ersten gemischten Merkmalen;
Anwenden eines Aufmerksamkeitsmechanismus auf die ersten gemischten Merkmale, um erste beachtete gemischte Merkmale zu erhalten;
Anwenden eines zweiten Aufmerksamkeitsmechanismus auf mindestens ein Kontextmerkmal der Kontextmerkmale, um mindestens ein beachtetes Kontextmerkmal zu erhalten;
Kombinieren der ersten beachteten gemischten Merkmale und des mindestens einen beachteten Kontextmerkmals zu zweiten gemischten Merkmalen; und
Erzeugen der Sprachwellenform basierend auf den zweiten gemischten Merkmalen.

10. Verfahren nach Anspruch 1, wobei das Erzeugen (1640) der Sprachwellenform Folgendes umfasst:
Kombinieren des Sprachlautmerkmals und der Kontextmerkmale zu ersten gemischten Merkmalen;
Anwenden eines Behandlungsmechanismus auf die ersten gemischten Merkmale, um erste beachtete gemischte Merkmale zu erhalten;
Durchführen einer durchschnittsbildenden Bündelung an mindestens einem Kontextmerkmal der Kontextmerkmale, um mindestens ein durchschnittliches Kontextmerkmal zu erhalten;
Kombinieren der ersten beachteten gemischten Merkmale und des mindestens einen durchschnittlichen Kontextmerkmals zu zweiten gemischten Merkmalen; und
Erzeugen der Sprachwellenform basierend auf den zweiten gemischten Merkmalen.

11. Verfahren nach Anspruch 1, wobei das Erzeugen (1620) des Sprachlautmerkmals Folgendes umfasst:
Erkennen einer Sprachlautsequenz aus der Texteingabe;
Aktualisieren der Sprachlautsequenz durch Hinzufügen eines Anfangstokens und/oder eines Endtokens zur Sprachlautsequenz, wobei die Länge des Anfangstokens und die Länge des Endtokens gemäß den Kontextmerkmalen bestimmt werden; und
Erzeugen des Sprachlautmerkmals basierend auf der aktualisierten Sprachlautsequenz.

12. Einrichtung (1700) zum Erzeugen von Sprache durch neuronale Text-zu-Sprache-(TTS-) Synthese, umfassend:
ein Beschaffungsmodul (1710) zum Erhalten einer Texteingabe;
ein Sprachlautmerkmalerzeugungsmodul (1720) zum Erzeugen eines Sprachlautmerkmals der Texteingabe;
ein Kontextmerkmalerzeugungsmodul (1730) zum Erzeugen von Kontextmerkmalen der Texteingabe basierend auf einer Satzmenge, die mit der Texteingabe verknüpft ist, umfassend eine Anordnung zum:
Erkennen einer Wortsequenz aus mindestens einem Satz der Satzmenge; und
Erzeugen der Kontextmerkmale basierend auf der Wortsequenz, umfassend:
Erzeugen einer Worteinbettungsvektorsequenz basierend auf der Wortsequenz;
Erzeugen einer durchschnittlichen Einbettungsvektorsequenz, die dem mindestens einen Satz entspricht, basierend auf der Worteinbettungsvektorsequenz;
Abgleichen der durchschnittlichen Einbettungsvektorsequenz mit einer Sprachlautsequenz der Texteingabe; und
Erzeugen der Kontextmerkmale basierend auf der abgeglichenen durchschnittlichen Einbettungsvektorsequenz; und
ein Sprachwellenformerzeugungsmodul (1740) zum Erzeugen einer Sprachwellenform, die der Texteingabe entspricht, basierend auf dem Sprachlautmerkmal und den Kontextmerkmalen.

13. Einrichtung zum Erzeugen von Sprache durch neuronale Text-zu-Sprache- (TTS-) Synthese, umfassend:
mindestens einen Prozessor; und
einen Speicher, der vom Computer ausführbare Anweisungen speichert, die, wenn sie ausgeführt werden, den mindestens einen Prozessor zu Folgendem veranlassen:
Erhalten einer Texteingabe;
Erzeugen eines Sprachlautmerkmals der Texteingabe;
Erzeugen von Kontextmerkmalen der Texteingabe basierend auf einer Satzmenge, die mit der Texteingabe verknüpft ist, wobei der Prozessor weiter für Folgendes betriebsfähig ist:
Erkennen einer Wortsequenz aus mindestens einem Satz der Satzmenge; und
Erzeugen der Kontextmerkmale basierend auf der Wortsequenz durch:
Erzeugen einer Worteinbettungsvektorsequenz basierend auf der Wortsequenz;
Erzeugen einer durchschnittlichen Einbettungsvektorsequenz, die dem mindestens einen Satz entspricht, basierend auf der Worteinbettungsvektorsequenz;
Abgleichen der durchschnittlichen Einbettungsvektorsequenz mit einer Sprachlautsequenz der Texteingabe; und
Erzeugen der Kontextmerkmale basierend auf der abgeglichenen durchschnittlichen Einbettungsvektorsequenz; und
Erzeugen einer Sprachwellenform, die der Texteingabe entspricht, basierend auf dem Sprachlautmerkmal und den Kontextmerkmalen.

## Revendications

1. Procédé (1600) pour générer de la parole par synthèse neuronale texte-voix (TTS), comprenant les étapes consistant à :
obtenir (1610) une entrée de texte ;
générer (1620) une caractéristique téléphonique de l'entrée de texte ;
générer (1630) des caractéristiques de contexte de l'entrée de texte sur la base d'un ensemble de phrases associées à l'entrée de texte, comprenant les étapes consistant à :
identifier une séquence de mots à partir d'au moins une phrase de l'ensemble de phrases ; et
générer les caractéristiques de contexte sur la base de la séquence de mots, comprenant les étapes consistant à :
générer une séquence de vecteurs d'intégration de mots sur la base de la séquence de mots ;
générer une séquence de vecteurs d'intégration moyenne correspondant à la au moins une phrase sur la base de la séquence de vecteurs d'intégration de mots ;
aligner la séquence de vecteurs d'intégration moyenne avec une séquence téléphonique de l'entrée de texte ; et
générer les caractéristiques de contexte sur la base de la séquence de vecteurs d'intégration moyenne alignée ; et
générer (1640) une forme d'onde vocale correspondant à l'entrée de texte sur la base de la caractéristique téléphonique et des caractéristiques contextuelles.

2. Procédé selon la revendication 1, dans lequel la génération (1630) des caractéristiques de contexte comprend les étapes consistant à :
obtenir des caractéristiques acoustiques correspondant à au moins une phrase de l'ensemble de phrases avant l'entrée de texte ; et
générer les caractéristiques de contexte sur la base des caractéristiques acoustiques.

3. Procédé selon la revendication 2, comprenant en outre l'étape consistant à :
aligner les caractéristiques de contexte avec une séquence téléphonique de l'entrée de texte.

4. Procédé selon la revendication 1, dans lequel la au moins une phrase comprend au moins l'une de : une phrase correspondant à l'entrée de texte, des phrases avant l'entrée de texte, et des phrases après l'entrée de texte.

5. Procédé selon la revendication 1, dans lequel la au moins une phrase représente le contenu de l'ensemble de phrases.

6. Procédé selon la revendication 1, dans lequel la génération (1630) des caractéristiques de contexte comprend les étapes consistant à :
déterminer une position de l'entrée de texte dans l'ensemble de phrases ; et
générer les caractéristiques de contexte sur la base de l'emplacement.

7. Procédé selon la revendication 6, dans lequel la génération des caractéristiques de contexte sur la base de l'emplacement comprend les étapes consistant à :
générer une séquence de vecteurs d'intégration de position sur la base de l'emplacement ;
aligner la séquence de vecteurs d'intégration de position avec une séquence téléphonique de l'entrée de texte ; et
générer les caractéristiques de contexte sur la base de la séquence de vecteurs d'intégration de position alignée.

8. Procédé selon la revendication 1, dans lequel la génération (1640) de la forme d'onde vocale comprend les étapes consistant à :
combiner la caractéristique téléphonique et les caractéristiques de contexte en caractéristiques mixtes ;
appliquer un mécanisme d'attention sur les caractéristiques mixtes pour obtenir des caractéristiques mixtes assistées ; et
générer la forme d'onde vocale sur la base des caractéristiques mixtes assistées.

9. Procédé selon la revendication 1, dans lequel la génération (1640) de la forme d'onde vocale comprend les étapes consistant à :
combiner la caractéristique téléphonique et les caractéristiques de contexte en caractéristiques mixtes ;
appliquer un premier mécanisme d'attention sur les premières caractéristiques mixtes pour obtenir des premières caractéristiques mixtes assistées ;
appliquer un second mécanisme d'attention sur au moins une caractéristique de contexte des caractéristiques de contexte pour obtenir au moins une caractéristique de contexte assistée ;
combiner les premières caractéristiques mixtes assistées et la au moins une caractéristique contextuelle assistée en secondes caractéristiques mixtes ; et
générer la forme d'onde vocale sur la base des secondes caractéristiques mixtes.

10. Procédé selon la revendication 1, dans lequel la génération (1640) de la forme d'onde vocale comprend les étapes consistant à :
combiner la caractéristique téléphonique et les caractéristiques de contexte en caractéristiques mixtes ;
appliquer un mécanisme d'attention sur les premières caractéristiques mixtes pour obtenir des premières caractéristiques mixtes assistées ;
effectuer un regroupement moyen sur au moins une caractéristique de contexte des caractéristiques de contexte pour obtenir au moins une caractéristique de contexte moyenne ;
combiner les premières caractéristiques mixtes assistées et la au moins une caractéristique de contexte moyenne en secondes caractéristiques mixtes ; et
générer la forme d'onde vocale sur la base des secondes caractéristiques mixtes.

11. Procédé selon la revendication 1, dans lequel la génération (1620) de la caractéristique téléphonique comprend les étapes consistant à :
identifier une séquence téléphonique à partir de l'entrée de texte ;
mettre à jour la séquence téléphonique en ajoutant un jeton de début et/ou un jeton de fin à la séquence téléphonique, dans lequel la longueur du jeton de début et la longueur du jeton de fin sont déterminées selon les caractéristiques de contexte ; et
générer la fonction téléphonique sur la base de la séquence téléphonique mise à jour.

12. Appareil (1700) pour générer de la parole par synthèse neuronale texte-voix (TTS), comprenant :
un module d'obtention (1710), pour obtenir une entrée de texte ;
un module de génération de caractéristique téléphonique (1720), pour générer une caractéristique téléphonique de l'entrée de texte ;
un module de génération de caractéristiques de contexte (1730), pour générer des caractéristiques de contexte de l'entrée de texte sur la base d'un ensemble de phrases associées à l'entrée de texte, comprenant un agencement pour :
identifier une séquence de mots à partir d'au moins une phrase de l'ensemble de phrases ; et
générer les caractéristiques de contexte sur la base de la séquence de mots,
comprenant les étapes consistant à :
générer une séquence de vecteurs d'intégration de mots sur la base de la séquence de mots ;
générer une séquence de vecteurs d'intégration moyenne correspondant à la au moins une phrase sur la base de la séquence de vecteurs d'intégration de mots ;
aligner la séquence de vecteurs d'intégration moyenne avec une séquence téléphonique de l'entrée de texte ; et
générer les caractéristiques de contexte sur la base de la séquence de vecteurs d'intégration moyenne alignée ; et
un module de génération de forme d'onde vocale (1740), pour générer une forme d'onde vocale correspondant à l'entrée de texte sur la base de la caractéristique téléphonique et des caractéristiques contextuelles.

13. Appareil pour générer de la parole par synthèse neuronale texte-voix (TTS), comprenant :
au moins un processeur ; et
une mémoire stockant des instructions exécutables par ordinateur qui, lorsqu'elles sont exécutées, amènent le au moins un processeur à :
obtenir une entrée de texte ;
générer une fonction téléphonique de l'entrée de texte ;
générer des caractéristiques de contexte de l'entrée de texte sur la base d'un ensemble de phrases associées à l'entrée de texte, le processeur pouvant en outre :
identifier une séquence de mots à partir d'au moins une phrase de l'ensemble de phrases ; et
générer les caractéristiques de contexte sur la base de la séquence de mots, par les étapes consistant à :
générer une séquence de vecteurs d'intégration de mots sur la base de la séquence de mots ;
générer une séquence de vecteurs d'intégration moyenne correspondant à la au moins une phrase sur la base de la séquence de vecteurs d'intégration de mots ;
aligner la séquence de vecteurs d'intégration moyenne avec une séquence téléphonique de l'entrée de texte ; et
générer les caractéristiques de contexte sur la base de la séquence de vecteurs d'intégration moyenne alignée ; et
générer une forme d'onde vocale correspondant à l'entrée de texte sur la base de la caractéristique téléphonique et des caractéristiques contextuelles.
